(19) Europäisches Patentamt
European Patent Office
Office européen des brevets

(11) **EP 4 220 777 A2**

(12) **EUROPEAN PATENT APPLICATION**

(43) Date of publication:
**02.08.2023  Bulletin 2023/31**

(21) Application number: **22185851.7**

(22) Date of filing: **19.07.2022**

(51) International Patent Classification (IPC):
$H01M\ 4/66^{(2006.01)}$     $H01M\ 4/04^{(2006.01)}$
$H01M\ 4/133^{(2010.01)}$     $H01M\ 4/1393^{(2010.01)}$
$H01M\ 10/0525^{(2010.01)}$     $H01M\ 4/02^{(2006.01)}$

(52) Cooperative Patent Classification (CPC):
**H01M 4/661; H01M 4/0404; H01M 4/133;**
**H01M 4/1393; H01M 4/667; H01M 10/0525;**
H01M 2004/027; Y02E 60/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.01.2022  KR 20220012559**

(71) Applicant: **SK On Co., Ltd.**
**Seoul 03161 (KR)**

(72) Inventors:
• **LIM, Hyo Sung**
  **34124 Daejeon (KR)**
• **LEE, Dong Hoon**
  **34124 Daejeon (KR)**

(74) Representative: **Stolmár & Partner**
**Patentanwälte PartG mbB**
**Blumenstraße 17**
**80331 München (DE)**

(54) **PRIMER COMPOSITION, ANODE AND SECONDARY BATTERY COMPRISING THE SAME, AND METHOD FOR MANUFACTURING ANODE**

(57)    The present invention provides a primer composition comprising a thickener that contains at least one functional group selected from the group consisting of a hydroxyl group and a carboxyl group, the primer composition comprising a thickener undissolved residue of 0.05 wt% or less based on the total solid weight thereof; an anode and a secondary battery comprising the same; and a method for manufacturing the anode.

**Description**

**CROSS-REFERENCE TO RELATED APPLICATION**

The present application claims priority under 35 U.S.C. § 119(a) to Korean patent application number 10-2022-0012559, filed on January 27, 2022, in the Korean Intellectual Property Office, the entire disclosure of which is incorporated by reference herein.

**BACKGROUND**

1. Technical Field

The present invention relates to a primer composition, an anode and a secondary battery comprising the same, and a method for manufacturing the anode.

2. Related Art

With the development of electronics, communication, and space industry, the demand for a lithium secondary battery as an energy power source is rapidly increasing. In particular, as the importance of global eco-friendly policies is emphasized, the electric vehicle market is growing rapidly, and research and development on the lithium secondary battery are being actively conducted at home and abroad.

The lithium secondary battery includes a cathode, an anode, and a separator disposed therebetween, and the cathode and the anode are provided with an active material capable of inserting and extracting lithium ions, respectively.

Meanwhile, when manufacturing the cathode, a primer layer and an active material slurry layer are coated in a wet-on-wet manner, which may improve the interfacial adhesion between a current collector and the active material slurry layer in the anode, but cause various defects in the process such as cracks or pin-holes occurred on the electrode surface due to the low viscosity of the primer layer.

**SUMMARY**

The present invention provides a primer composition having a low rate of process defects and improved rapid charging performance, an anode and a secondary battery comprising the same, and a method for manufacturing the anode.

A primer composition according to the present invention comprises a thickener that contains at least one functional group selected from the group consisting of a hydroxyl group and a carboxyl group, the primer composition comprising a thickener undissolved residue of 0.05 wt% or less based on the total solid weight thereof.

According to an embodiment, the thickener may include at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

According to an embodiment, the thickener may include carboxymethyl cellulose.

According to an embodiment, a substitution degree of the thickener may be 0.5 to 1.0.

According to an embodiment, a weight-average molecular weight of the thickener may be 300,000 to 500,000.

According to an embodiment, a viscosity of the primer composition (Brookfield viscometer, a room temperature, 30 rpm) may be 20 cps to 5,000 cps.

According to an embodiment, the primer composition may comprise a binder.

According to an embodiment, the binder may include a styrene-butadiene rubber.

According to an embodiment, the binder may further include one or more selected from the group consisting of polyvinylidene fluoride, polyvinyl alcohol, a starch, hydroxypropyl cellulose, regenerated cellulose, polyvinylpyrrolidone, tetrafluoroethylene, polyethylene, polypropylene, an ethylene-propylene-diene terpolymer (EPDM), a sulfonated EPDM, a styrene-butadiene rubber, a fluoro rubber, a styrene monomer (SM), butadiene (BD) and butyl acrylate (BA).

According to an embodiment, the primer composition may comprise one or more conductive materials selected from the group consisting of a natural graphite, an artificial graphite, a carbon black, an acetylene black, a Ketjen black, a channel black, a furnace black, a lamp black, a summer black, a carbon fiber, a metal fiber, carbon fluoride, aluminum powder, nickel powder, zinc oxide, potassium titanate, titanium oxide, and a polyphenylene derivative. The anode according to the present invention includes a current collector, a primer layer positioned on the current collector and containing the primer composition of the present invention, and an anode-active material layer positioned on at least a portion of the primer layer.

According to an embodiment, the number of pin-holes per unit area of $1 \times 1 \ m^2$ on the anode may be 5 or less.

A secondary battery according to the present invention comprises a cathode, an anode of the present invention, and a separator interposed between the cathode and the anode.

A method for manufacturing the anode according to the present invention comprises the steps of (a) preparing a slurry containing a thickener including at least one functional group selected from the group consisting of a hydroxyl group and a carboxyl group, (b) filtering the slurry to prepare a primer composition, and (c) applying the primer composition on a current collector to form a primer layer, wherein a thickener undissolved residue is 0.05 wt% or less, based on the total solid weight of the primer composition prepared in the step (b).

According to an embodiment, the step (a) may further include mixing a styrene-butadiene rubber as a binder with the slurry.

According to an embodiment, the step (b) may include filtering the slurry using a mesh filter of 80 to 120.

According to an embodiment, a viscosity (Brookfield viscometer, a room temperature, 30 rpm) of the primer composition prepared in the step (b) may be 20 cps to 5,000 cps.

According to an embodiment, the step (c) may further include forming an anode-active material layer by coating a slurry containing an anode-active material on at least a portion of the primer layer.

According to an embodiment, the anode-active material layer on the primer layer may be formed in a wet-on-wet manner.

A primer composition according to the present invention comprises a thickener, thereby being capable of improving a problem of cracks occurring on the electrode surface by enhancing cohesion between binders contained in the primer composition.

Further, the primer composition according to the present invention can improve a problem of pin-holes occurring on the electrode surface around a thickener undissolved residue by reducing a content of the thickener undissolved residue in the primer composition.

Furthermore, the primer composition according to the present invention increases an interfacial adhesion between a current collector and an electrode-active material layer in the anode, thereby being capable of enhancing a resistance and a rapid charging performance of the secondary battery by improving a problem of the electrode extraction.

Still furthermore, A secondary battery according to the present invention improves problems of cracks and pin-holes occurring on the electrode surface, thereby being capable of securing reliability of a product by reducing a defective rate of the product caused during the manufacturing process.

**DETAILED DESCRIPTION**

Since the structural or functional descriptions of the embodiments or examples disclosed in the specification of the present application are merely illustrative for the purpose of describing the embodiments or examples according to the technical spirit of the present invention, they may be implemented in various modifications rather than the embodiments or examples disclosed in the specification of the present application. Accordingly, the technical spirit of the present invention should not be construed as being limited to the embodiments or examples described in the specification of the present application.

Hereinafter, a primer composition according to the present invention, an anode and a secondary battery comprising the same, and a method for manufacturing the anode will be described.

**<Primer composition>**

A primer composition according to the present invention comprises a thickener that contains at least one functional group selected from the group consisting of a hydroxyl group and a carboxyl group, the primer composition comprising a thickener undissolved residue of 0.05 wt% or less based on the total solid weight thereof.

In general, an anode comprising the primer composition is prepared by forming a primer layer containing the primer composition on a current collector, and then coating a slurry containing an active material on the primer layer, thereby enhancing an interfacial adhesion between the current collector and an electrode-active material layer in the anode to improve a problem of the electrode extraction.

However, various problems of the process are caused in case the primer composition is not dried after its application, that is, in case the slurry of a high density is applied on a top of the applied primer layer thickly in a state where fluidity of the primer composition is high due to a low viscosity thereof. Typically, at the moment the slurry is applied by a slot die coating, the primer layer as a substrate is slipped, causing a problem on the process in which the slurry is not applied in a desired amount. In addition, the high fluidity of the primer layer is added to a surface tension of the slurry, which may cause a problem of a side ring that is applied with a high thickness to an end part of the electrode coating.

Further, the defects in the process become worse in case the viscosity of the primer composition is lower. In general, since coating of a thin film is performed by diluting a binder solution to a low concentration and coating it, the above defects may occur more severely. Additionally, although there exists an effect of improving the performance because most of the binder in the electrode is positioned at the interface between the current collector and the anode, a problem that occurrence of the cracks become worse on a surface of the anode during the drying process may be caused.

According to an embodiment, the primer composition of the present invention comprises a thickener in order to lower the defects in this process. The primer composition according to the present invention comprises the thickener containing at least one functional group selected from the group consisting of a hydroxyl group and a carboxyl group, wherein the thickener has an effect of enhancing cohesion between the anode-active materials. The thickener can strengthen the cohesion at the interface between a layer having a high binder concentration and a layer having a low binder concentration by adding the thickener to the primer composition, thereby significantly improving the problem of cracks occurring on the electrode surface.

However, in case the thickener is added to the primer composition to improve the problem of cracks on the electrode surface, a dewetting phenomenon caused by a thickener undissolved undissolved residue that was not dissolved in the primer composition may cause occurrence of the pin-holes on the electrode surface.

According to an embodiment, the primer composition of the present invention contains 0.05 wt% or less of the thickener undissolved residue, based on the total solid weight of the primer composition, in order to improve the problems of cracks occurred on the electrode surface and the pin-hole defects on the electrode surface. Preferably, the thickener undissolved residue may be contained in an amount of 0.04 wt% or less, 0.03 wt% or less, or 0.02 wt% or less, based on the total solid weight of the primer composition. When the content of the thickener undissolved residue is higher than the above numerical value, the pin-holes may be formed on the electrode surface around the thickener undissolved residue.

Specifically, the thickener undissolved residue means an undissolved aggregate of the thickener contained in the primer composition. Also, the undissolved aggregate of the thickener may refer to a microgel of the thickener contained in the primer composition.

More specifically, the content of the thickener undissolved residue may be calculated according to Equation 1 below.

$$[\text{Equation 1}]$$

$$\text{Content of thickener undissolved Residue (wt\%)} = (A-B)/C \times 100$$

In the Equation 1,

A: A Sum of a content of the unfiltered thickener undissolved residue and a weight of a mesh filter after filtering the primer composition using the mesh filter of 80 to 120 and drying it at a room temperature,
B: A weight of the mesh filter,
C: a weight of the primer composition filtered using the mesh filter $\times$ a solid content (wt%) of the primer composition.

As described above, the primer composition according to the present invention can improve the pin-hole defects on the electrode surface by removing or lowering the content of the thickener contained in the primer composition, using the mesh filter or the like.

According to an embodiment, the solid content of the primer composition may be 15 wt% or more, 16 wt% or more, 17 wt% or more, 18 wt% or more, 19 wt% or more, or 20 wt% or more, based on the total weight of the primer composition, and 30 wt% or less, 29 wt% or less, 28 wt% or less, 27 wt% or less, 26 wt% or less, or 25 wt% or less, based on the total weight of the primer composition. For example, it may be 15 to 30 wt%, 17 to 28 wt%, or 20 to 25 wt%, based on the total weight of the primer composition.

According to an embodiment, the solid content of the thickener may be 0.001 wt% or more, 0.005 wt% or more, 0.01 wt% or more, 0.05 wt% or more, or 0.1 wt% or more, based on the total weight of the primer composition, and 3 wt% or less, 2.5 wt% or less, 2 wt% or less, 1.8 wt% or less, or 1.0 wt% or less, based on the total weight of the primer composition. For example, it may be 0.001 to 3.0 wt%, 0.005 wt% to 2.5 wt%, 0.01 wt% to 2 wt%, 0.05 wt% to 1.8 wt%, or 0.1 to 1.0 wt%, based on the total weight of the primer composition. If the solid content of the thickener is lower than the above numerical value, the viscosity of the primer composition is too low, thereby causing the defects in the process such as the slipping of the primer layer described above. In contrast, if the solid content of the thickener is higher than the above numerical value, the content of the thickener undissolved residue is increased, thereby causing occurrence of the pin-holes after electrode coating.

According to an embodiment, the thickener may include one or more selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and a cellulose gum. Preferably, the thickener may include carboxymethyl cellulose (CMC).

According to an embodiment, a substitution degree of the thickener may be 0.5 or more, 0.55 or more, 0.6 or more, 0.65 or more, or 0.7 or more, and 1.0 or less, 0.95 or less, 0.9 or less, 0.85 or less, or 0.8 or less. For example, it may be 0.5 to 1.0, 0.6 to 0.9, or 0.7 to 0.8. If the substitution degree of the thickener is lower than the above numerical value, a water solubility is low, whereby a lot of the thickener undissolved residues exist upon dissolution in a distilled water, so that the pin-holes may occur on the electrode surface after coating. In contrast, if the substitution degree is higher than the above numerical value, a solubility may be improved due to increase of the hydrophilicity, but an adsorption amount may be decreased due to deterioration of an affinity with the active material.

According to an embodiment, a weight-average molecular weight (Mw) of the thickener may be 300,000 or more, 320,000 or more, 350,000 or more, or 380,000 or more, and 500,000 or less, 480,000 or less, 450,000 or less, or 420,000 or less. For example, it may be 300,000 to 500,000, 350,000 to 450,000, or 380,000 to 420,000. The weight-average molecular weight of the thickener may be measured as a relative value with respect to a standard PS (polystyrene) sample through GPC (Gel Permeation Chromatography, waters breeze), using THF (tetrahydrofuran) as an eluent. If the weight-average molecular weight of the thickener is lower than the above numerical value, the anode-active material cannot be evenly dispersed due to decrease in an attractive force between each polymer that forms a network by the thickener, whereby an adhesion of the active material is lowered, which may adversely affect lifespan characteristics of the battery. On the contrary, if the weight-average molecular weight of the thickener is higher than the above numerical value, the viscosity of the slurry may increase to such an extent that the coating is difficult because the viscosity is too high at the same concentration. In order to prevent this, if the viscosity is reduced by further adding a distilled water, a solid content in the slurry is reduced, and thus productivity of the electrode may be reduced.

According to an embodiment, a viscosity (Brookfield viscometer, a room temperature, 30 rpm) of the primer composition of the present invention may be 20 cps or more, 50 cps or more, or 100 cps or more, and 5,000 cps or less, 4,000 cps or less, 3,000 cps or less, or 2,000 cps or less. For example, it may be 20 to 5,000 cps, 50 to 4,000 cps, or 100 to 2,000 cps. If the viscosity of the primer composition is lower than the above numerical value, the defects in the process such as slipping of the primer layer and a side ring may be caused. Conversely, if the viscosity of the primer composition is higher than the above numerical value, either occurrence of the pinholes may be caused on the electrode surface due to the thickener undissolved residue, or there may be difficulties in process application due to the high viscosity.

According to an embodiment, the primer composition of the present invention may comprise a binder. Further, the binder may include a styrene-butadiene rubber. In addition, the binder may further include at least one selected from the group consisting of polyvinylidene fluoride, polyvinyl alcohol, a starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, a styrene-butadiene rubber, a fluoro rubber, a styrene monomer (SM), butadiene (BD), and butyl acrylate (BA).

According to an embodiment, a solid content of the binder may be 15 wt% or more, 16 wt% or more, 18 wt% or more, or 20 wt% or more, and 30 wt% or less, 28 wt% or less, 26 wt% or less, or 24 wt% or less, based on the total weight of the primer composition. For example, it may be 15 to 30 wt%, 16 to 28 wt%, or 20 to 24 wt%, based on the total weight of the primer composition. If the solid content of the binder is lower than the above numerical value, an adhesion between the current collector and the active material or between the active materials is lowered, so that the improvement effect of a rapid charging performance may be weakened. Conversely, if the solid content of the binder is higher than the above numerical value, a resistance increase in the electrode is caused to deteriorate characteristics of the battery, so that the capacity and conductivity of the electrode may be lowered due to the relatively low content of the active material and the conductive material. For example, the binder may include the styrene-butadiene rubber having a solid content of 40%, a pH of 8, a particle size of 50 to 300 nm, and a glass transition temperature (Tg) of -5 to 10°C.

According to an embodiment, the primer composition according to the present invention may further comprise a component used to form the primer layer. For example, in order to improve the conductivity, the primer composition may comprise one or more conductive materials selected from the group consisting of a natural graphite, an artificial graphite, a carbon black, an acetylene black, a Ketjen black, a channel black, a furnace black, a lamp black, a summer black, a carbon fiber, a metal fiber, carbon fluoride, aluminum powder, nickel powder, zinc oxide, potassium titanate, titanium oxide, and a polyphenylene derivative.

<Anode>

An anode according to the present invention includes a current collector, a primer layer positioned on the current collector and including a primer composition of the present invention, and an anode-active material layer positioned on at least a portion of the primer layer.

According to an embodiment, the current collector is not particularly limited as long as it has conductivity without causing a chemical change in the secondary battery, and may, for example, include a copper, a stainless steel, an aluminum, a nickel, a titanium, a sintered carbon, a surface treatment of the copper or the stainless steel with the carbon, the nickel, the titanium or a silver, etc., or an aluminum-cadmium alloy, etc. In addition, a surface of the current collector may be formed with fine irregularities to reinforce an adhesion of the anode-active material, and the current collector may be used in various forms such as a film, a sheet, a foil, a net, a porous material, a foam, and a nonwoven fabric.

According to an embodiment, the primer layer comprises a primer composition, and the primer composition may contain the same thickener and content of the thickener undissolved residue described in relation to the primer composition above.

According to an embodiment, a thickness of the primer layer may be 0.1% to 10% based on the thickness of the anode composite layer, and, for example, 0.1 to 5.0 $\mu$m, specifically, 0.1 to 3.0 $\mu$m.

According to an embodiment, when the anode-active material layer is positioned on the primer layer in the anode, a binder of the primer layer may be distributed in various forms. For example, the binder may be distributed adjacent to the current collector or be distributed inside the anode-active material layer through diffusion of the binder.

According to an embodiment, the primer layer and the anode-active material layer may be coated in a wet-on-wet manner by a slot-die coater, a roll-coater, a knife coater, an extrusion coater, or a Gravure-coater, thereby enhancing an interfacial adhesion between the current collector and the anode-active material layer, and improving a problem of the electrode extraction, which results in improvement of the battery resistance and the rapid charging performance.

According to an embodiment, the number of pin-holes per unit area in the anode according to the present invention may be 5 or less, 4 or less, 3 or less, or 1 or less. The number of pin-holes is a number measured with a unit area of $1\times 1$ m$^2$.

### <Secondary battery>

A secondary battery according to the present invention includes a cathode, an anode of the present invention, and a separator interposed between the cathode and the anode.

According to an embodiment, the secondary battery includes the anode, and the anode may use the current collector, the primer layer, the anode-active material layer, etc., that are described in relation to the anode above.

According to an embodiment, the secondary battery includes the cathode and the separator, in addition to the anode according to the embodiment of the present invention. The cathode and the anode may include the current collector and an active material layer disposed on the current collector, respectively. For example, the cathode may include a cathode current collector and a cathode-active material layer, and the anode may include an anode current collector and an anode-active material layer. The active material layer may include an active material. For example, the cathode-active material layer may include the cathode-active material, and the anode-active material layer may include the anode-active material. The cathode-active material may be a material capable of inserting and extracting lithium (Li) ions.

According to an embodiment, the cathode-active material may be a lithium metal-based oxide. For example, the cathode-active material may be one of a lithium manganese-based oxide, a lithium nickel-based oxide, a lithium cobalt-based oxide, a lithium nickel manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, and is not necessarily limited to these specific examples.

According to an embodiment, the anode-active material may be a material capable of inserting and extracting lithium ions. For example, the anode-active material may be any one of a crystalline carbon, an amorphous carbon, a carbon composite material, a carbon-based material such as a carbon fiber, a lithium alloy, silicon (Si), and tin (Sn). For example, the anode-active material may be a natural graphite or an artificial graphite, but is not limited to these specific examples.

According to an embodiment, the separator may be interposed between the cathode and the anode. The separator is configured to prevent an electrical short circuit between the cathode and the anode and to generate flow of the ions. The separator may include a porous polymer film or a porous nonwoven fabric. Herein, the porous polymer film may consist of a single layer or multiple layers including a polyolefin-based polymer such as an ethylene polymer, a propylene polymer, an ethylene/butene copolymer, an ethylene/hexene copolymer, and an ethylene/methacrylate copolymer. The porous nonwoven fabric may include a glass fiber of high melting point and a polyethylene terephthalate fiber. However, the separator may include, without being not limited thereto, a highly heat-resistant separator (CCS; ceramic coated separator) including a ceramic, according to an embodiment.

According to an embodiment, there may be provided an electrode battery including a cathode, an anode, and a separator. The electrode battery may be wound, laminated, folded, or zigzag stacked, thereby providing an electrode assembly.

According to an embodiment, the electrode assembly may be equipped together with an electrolyte to provide the secondary battery according to the embodiment. The secondary battery may have any one of a cylindrical shape using a can, a prismatic shape, a pouch type, and a coin type, but is not limited thereto.

According to an embodiment, an electrolyte may be a non-aqueous electrolyte. The electrolyte may include a lithium salt and an organic solvent. The organic solvent may include at least one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

**<Method for manufacturing anode>**

A method for manufacturing an anode according to the present invention comprises the steps of (a) preparing a slurry containing a thickener including at least one functional group selected from the group consisting of a hydroxyl group and a carboxyl group, (b) filtering the slurry to prepare a primer composition, and (c) applying the primer composition on a current collector to form a primer layer, wherein a thickener undissolved residue is 0.05 wt% or less, based on the total solid weight of the primer composition prepared in the step (b).

According to an embodiment, the above manufacturing method comprises the step (a) of preparing the slurry containing the thickener including at least one functional group selected from the group consisting of the hydroxy group and the carboxy group. In addition, the step (a) may further include mixing a binder of a styrene-butadiene rubber with the slurry.

According to an embodiment, the thickener and the binder may be the same types of the thickener and the binder as aforesaid in relation to the primer composition.

According to an embodiment, the manufacturing method comprises the step (b) of filtering the slurry to prepare the primer composition.

According to an embodiment, the step (b) may be configured to filter the slurry using a mesh filter of 80 to 120. In the step of preparing the primer composition by filtering the slurry, the mesh filter, for example, the mesh filter of 120 (a mesh size of 210 um), is used to remove the thickener undissolved residue contained in the primer composition or lower the content thereof, thereby being capable of improving the pin-hole defect occurred on the electrode surface.

According to an embodiment, a viscosity (Brookfield viscometer, a room temperature, 30 rpm) of the primer composition prepared in the step (b) may be 20 cps to 5,000 cps. If the viscosity of the primer composition is lower than the above numerical value, defects in the process such as slipping of the primer layer and a side ring may be caused during the process of applying the primer composition on the current collector. On the contrary, if the viscosity of the primer composition is higher than the above numerical value, occurrence of the pin-holes on the electrode surface may be caused due to the thickener undissolved residue, or difficulties in the process application may be caused due to the high viscosity.

According to an embodiment, the thickener undissolved residue is contained in an amount of 0.05 wt% or less based on the total solid weight of the primer composition prepared in the step (b). The content of the thickener undissolved residue can be equally calculated from the Equation 1 as aforesaid in relation to the thickener undissolved residue.

According to an embodiment, the manufacturing method comprises the step (c) of forming the primer layer by applying the primer composition on the current collector. In addition, the step (c) may further include forming an anode-active material layer by coating a slurry containing the anode-active material on at least a portion of the primer layer.

A method of forming the anode-active material layer on the primer layer may be performed by a known manner, preferably, a wet-on-wet manner. For example, after applying the primer composition on the current collector, the anode-active material layer is formed in an undried state. The anode-active material layer may be coated on the primer layer in the wet-on-wet manner by using a slot-die coater, a roll coater, a knife coater, an extrusion coater, or a Gravure coater.

Hereinafter, the present invention will be described in more detail based on Examples and Comparative Examples. However, the following Examples and Comparative Examples are intended to be merely illustrations for explaining the present invention in more detail, without limiting the present invention to the Examples and Comparative Examples.

**EXAMPLES**

**<Preparation of primer composition>**

**Example 1**

A CMC (carboxymethyl cellulose, a substitution degree of 0.7, a weight-average molecular weight of 400,000) as a thickener was dissolved in pure water such that it has a solid content of 0.6 wt% to prepare a CMC solution. The prepared CMC solution was mixed with a SBR (styrene-butadiene rubber, a solid content of 40 wt%, a pH of 8, a particle size of 150 nm, a Tg of 2°C) suspension as a binder to prepare a mixture. Thereafter, the mixture was filtered using a filter, and the thickener undissolved residue was removed to prepare a primer composition. A content of the SBR solid and a content of the CMC solid in the prepared primer composition, a filter size, the number of filtering, and a content of the solid in the primer composition were shown in Table 1 below.

**Examples 2 to 5 and Comparative Examples 1 to 3**

A primer composition was prepared by the same process as in Example 1, except that a content of the SBR solid and a content of the CMC solid in the primer composition, a filter size, the number of filtering, and a content of the solid in the primer composition were applied as described in Table 1 below.

**<Measurement of viscosity of primer composition>**

Viscosities of the primer compositions of Examples 1 to 5 and Comparative Examples 1 to 3 were measured at a room temperature at 30 rpm, using a Brookfield Viscometer Spindle No. 5, and were shown in Table 1 below.

**<Calculation of content of thickener undissolved residue >**

After preparing a mesh filter having a mesh size of 120 in a cone shape with an area of 50 mm in diameter, 100 g of each of the primer compositions prepared in Examples 1 to 5 and Comparative Examples 1 to 3 were passed through the mesh filter under gravity, and an undissolved residue on a top of the mesh filter was dried at a room temperature for 4 hours. At this time, by measuring weights of the mesh filter before and after filtering, a content of CMC undissolved residue, which is a thickener, was calculated according to Equation 2 below, based on the total solid weight of the primer composition. The contents of the CMC undissolved residues as the thickener, based on the total solid weights of the primer compositions of Examples 1 to 5 and Comparative Examples 1 to 3, were shown in Table 1 below.

$$[Equation\ 2]$$

$$Content\ of\ thickener\ undissolved\ residue\ (wt\%)\ based\ on\ total\ solid\ weight\ of\ primer\ composition = (A-B)/C \times 100$$

In the Equation 2,

A: Weight of the mesh filter after filtering
B: Weight of the mesh filter before filtering
C: Weight of the filtered primer composition × a content of solid of the primer composition (wt%)

[Table 1]

| | Examples | | | | | Comparative Examples | | |
|---|---|---|---|---|---|---|---|---|
| | 1 | 2 | 3 | 4 | 5 | 1[1] | 2[2] | 3 |
| Content of SBR[3] solid in primer composition (wt%) | 20 | 25 | 20 | 20 | 20 | 20 | 20 | 20 |
| Content of CMC[4] solid in primer composition (wt%) | 0.30 | 0.30 | 0.15 | 0.30 | 0.30 | - | 0.30 | 0.30 |
| Filter size (mesh) | 120 | 120 | 120 | 80 | 80 | 120 | - | 30 |
| Number of filtering | 1 time | 1 time | 1 time | 1 time | 2 times | 1 time | 0 times | 1 time |

(continued)

| | Examples | | | | | Comparative Examples | | |
|---|---|---|---|---|---|---|---|---|
| | 1 | 2 | 3 | 4 | 5 | 1[1] | 2[2] | 3 |
| Content of solid in primer composition (wt%) | 20.30 | 25.30 | 20.15 | 20.30 | 20.30 | 20.00 | 20.30 | 20.30 |
| Viscosity of primer composition (cps) | 690 | 733 | 317 | 683 | 667 | <10 | 693 | 707 |
| Content of thickener undissolved residue based on total solid weight of primer composition (wt%) | 0.014 | 0.028 | 0.009 | 0.018 | 0.005 | - | 0.075 | 0.089 |

1) Comparative Example 1: No thickener in the primer composition

2) Comparative Example 2: No filtering

3) SBR: A binder containing styrene-butadiene rubber (solid content of 40%, pH of 8, particle size of 150nm, Tg of 2°C)

4) CMC: Carboxymethyl cellulose [DS (substitution degree) of 0.7, weight-average molecular weight of 400,000]

## EXPERIMENTAL EXAMPLES

### Experimental Example 1 - Evaluation of anode quality

#### <Manufacture of anode>

An anode-active material having an artificial graphite (D50: 13 $\mu$m): a natural graphite (D50: 10 $\mu$m) mixed in a weight ratio of 5:5, a CMC thickener, and a SBR binder were added to water in a weight ratio of 98.5:1:0.5 to prepare an anode slurry having a viscosity of 5,000 cps.

The primer composition prepared in Example 1 and the anode slurry were applied on a surface of a copper current collector (a copper foil with a thickness of 8 $\mu$m) to thicknesses of 1 $\mu$m and 200 $\mu$m, respectively, using a Gravure coater and a slot die coater, and then dried. Another surface of the copper current collector was applied and dried in the same manner as the above.

The dried anode was rolled (a rolling density: 1.68 g/cm$^3$) to manufacture an anode having an anode-active material layer formed thereon. In this case, a thickness of the manufactured anodee was 127 $\mu$m.

In the same process as that for manufacturing the anode using the primer composition prepared in Example 1, anodes having a thickness of 127 $\mu$m were manufactured using the primer compositions prepared in Examples 2 to 5 and Comparative Examples 1 to 3, respectively.

#### <Measurement of the number of pin-holes on anode>

For each of the anodes, the number of pin-holes having a diameter of 200 $\mu$m or more per 1 m2 of the anode was visually observed. After observation for a total of 5 times, the average value of the number of pin-holes was calculated as the number of pin-holes on the anode and shown in Table 2 below.

#### <Measurement of crack frequency on anode>

For each of the anodes, the number of cracks having a length of 5 mm or more and a depth of 20 $\mu$m or more per 1 m2 of the anode was visually observed. After observation for a total of 5 times, the average value of the number of cracks on the anode was calculated as crack frequency on the anode, and shown in Table 2 below.

[Table 2]

| | Examples | | | | | Comparative Examples | | |
|---|---|---|---|---|---|---|---|---|
| | 1 | 2 | 3 | 4 | 5 | 1 | 2 | 3 |
| Number of pin-holes on anode | 0 | 0 | 0 | 0 | 0 | 0 | 8.2 | 9.1 |
| Crack frequency on anode | 0 | 0 | 0 | 0 | 0 | 6.3 | 0 | 0 |

**Experimental Example 2 - Evaluation of battery Performance**

**<Manufacture of cathode>**

A slurry was prepared by mixing $Li[Ni_{0.88}Co_{0.1}Mn_{0.02}]O_2$ as a cathode-active material, a carbon black as a conductive material, and polyvinylidene fluoride (PVdF) as a binder in a weight ratio of 96.5:2:1.5. The slurry was uniformly applied to an aluminum foil having a thickness of 12 $\mu$m, and dried under vacuum to manufacture a cathode.

**<Manufacture of secondary battery>**

The manufactured cathode and the anode manufactured by using the primer composition prepared in Example 1 were notched to a predetermined size to laminate them, and a separator (polyethylene, a thickness of 13 $\mu$m) was interposed between the cathode and the anode to form an electrode battery, and then, tab portions of the cathode and the anode were welded, respectively. The welded cathode/separator/anode assembly was placed in a pouch, and three sides of the pouch were sealed except for a side to which an electrolyte was injected. In this case, the part having the electrode tab was made to be included in the sealing part.

The electrolyte was injected through the remaining side except for the sealing part, and the remaining side was sealed and then impregnated for 12 hours or more. The electrolyte was prepared by dissolving 1M LiPF6 in a mixed solvent of EC/EMC/DEC (25/45/30; a volume ratio), followed by adding 1 wt% of vinylene carbonate (VC), 0.5 wt% of 1,3-propensultone (PRS) and 0.5 wt% of lithium bis(oxalato)borate (LiBOB).

Thereafter, pre-charging was performed for 36 minutes with a current corresponding to 0.25C. After 1 hour, degassing was performed and aging was carried out for 24 hours or more, followed that chemical charge and discharge were performed (a charge condition CC-CV 0.2C 4.2V 0.05C CUT-OFF, a discharge condition CC 0.2C 2.5V CUTOFF). Thereafter, a secondary battery was manufactured by performing standard charge/discharge (the charge condition CC-CV 0.33C 4.2V 0.05C CUT-OFF, the discharge condition CC 0.33C 2.5V CUT-OFF).

In the same process as that for manufacturing the secondary battery using the primer composition of Example 1, each of the secondary batteries were manufactured using the primer compositions of Examples 2 to 5 and Comparative Examples 1 to 3.

**<Measurement of resistance value of secondary battery>**

After each secondary battery manufactured above was fully charged (the charge condition CC-CV 0.33C 4.2V 0.05C CUT-OFF), it was discharged with a current ($I_0$) of 0.33C by a half of the discharge capacity at standard charge/discharge. Then, after resting for 1 hour, a voltage ($V_0$) of 50% SOC was measured. In addition, after the secondary battery prepared under 50% SOC was discharged at 1.0 C-rate for 10 seconds, a termination voltage ($V_1$) was measured. A resistance value (mQ) of the secondary battery was measured at 1.0C for 10 seconds under the discharge condition of SOC 50% according to Equation 3 below, and shown in Table 3 below.

$$[\text{Equation 3}]$$

$$\text{Resistance value of secondary battery (m}\Omega\text{)} = (V_1 - V_0)/(I_0)$$

**<Measurement of voltage value after rapidly charging secondary battery 5 times>**

Each of the manufactured secondary batteries was charged from 8% SOC to 80% SOC at a room temperature for 20 minutes under a rapid charging condition, and a cycle of discharging at a current of 0.33C was performed for them 5 times. After rapidly charging the secondary battery 5 times, a voltage value (V) was measured and shown in Table 3 below.

[Table 3]

| | Examples | | | | | Comparative Examples | | |
|---|---|---|---|---|---|---|---|---|
| | 1 | 2 | 3 | 4 | 5 | 1 | 2 | 3 |
| Resistance value of secondary battery (mΩ) | 1.251 | 1.234 | 1.256 | 1.245 | 1.246 | 1.281 | 1.315 | 1.307 |
| Voltage value (V) after rapidly charging secondary battery 5 times | 4.146 | 4.142 | 4.147 | 4.144 | 4.144 | 4.163 | 4.180 | 4.172 |

According to Tables 1 to 3 above, Examples 1 to 5 that use the primer composition containing the content of the thickener undissolved residue of 0.05 wt% or less based on the total solid weight of the primer composition could confirm that the number of pin-holes and the crack frequency on the anode were remarkably reduced compared to Comparative Example 1 to 3. In addition, Examples 1 to 5 could confirm that the resistance value of the secondary battery was lower than that of Comparative Examples 1 to 3, due to no occurrence of the pin-holes and the cracks on the anode. Further, in case of Examples 1 to 5, it was confirmed that the voltage value after rapidly charging the secondary battery 5 times was lower than that of Comparative Examples 1 to 3, and thus the rapid charging performance was excellent.

Contrary to this, Comparative Example 1 which did not contain the thickener could confirm that the cracks occurred on the anode. Further, Comparative Examples 2 and 3 containing the thickener in the content of the thickener undissolved residue exceeding 0.05 wt% based on the total solid weight of the primer composition could confirm that a large number of the pin-holes occurred on the anode, and that the quality of the anode and the battery performance of the secondary battery were remarkably reduced due to the higher resistance value of the secondary battery and the higher voltage value after rapidly charging the secondary battery 5 times.

## Claims

1.  A primer composition comprising a thickener that contains at least one functional group selected from the group consisting of a hydroxyl group and a carboxyl group, the primer composition comprising a thickener undissolved residue of 0.05 wt% or less based on the total solid weight thereof.

2.  The primer composition according to claim 1,
    wherein the thickener includes at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

3.  The primer composition according to claim 1,
    wherein a substitution degree of the thickener is 0.5 to 1.0.

4.  The primer composition according to claim 1,
    wherein a weight-average molecular weight of the thickener is 300,000 to 500,000.

5.  The primer composition according to claim 1,
    wherein a viscosity of the primer composition (Brookfield viscometer, a room temperature, 30 rpm) is 20 cps to 5,000 cps.

6.  The primer composition according to claim 1,
    further comprising a binder.

7.  The primer composition according to claim 6,
    wherein the binder includes a styrene-butadiene rubber.

8.  An anode comprising: a current collector; a primer layer positioned on the current collector and containing the primer composition according to claim 1; and an anode-active material layer positioned on at least a portion of the primer layer.

9.  The anode according to claim 8,
    wherein the number of pin-holes per unit area of $1 \times 1$ m$^2$ on the anode is 5 or less.

10. A secondary battery comprising: a cathode; an anode according to claim 8; and a separator interposed between the cathode and the anode.

11. A method for manufacturing an anode, comprising the steps of (a) preparing a slurry that contains a thickener including at least one functional group selected from the group consisting of a hydroxyl group and a carboxyl group; (b) filtering the slurry to prepare a primer composition; and (c) applying the primer composition on a current collector to form a primer layer,
    wherein a thickener undissolved residue is 0.05 wt% or less, based on the total solid weight of the primer composition prepared in the step (b).

12. The method for manufacturing the anode according to claim 11,
    wherein the step (a) further includes mixing a styrene-butadiene rubber as a binder with the slurry.

13. The method for manufacturing the anode according to claim 11,
    wherein the step (b) includes filtering the slurry using a mesh filter of 80 to 120.

14. The method for manufacturing the anode according to claim 11,
    wherein the step (c) further includes forming an anode-active material layer by coating a slurry containing an anode-active material on at least a portion of the primer layer.

15. The method for manufacturing the anode according to claim 14,
    wherein the anode-active material layer on the primer layer is formed in a wet-on-wet manner.

REFERENCES CITED IN THE DESCRIPTION

**Patent documents cited in the description**

- KR 1020220012559